# EUROPEAN PATENT APPLICATION

(11) **EP 4 187 813 A1**
(43) Date of publication of application: **31.05.2023**
(21) Application number: 21832310.3
(22) Date of filing: 11.05.2021

(54) **RESOURCE DISTRIBUTION METHOD FOR CLOUD SERVICE AND RELATED DEVICE**

(30) Priority: 29.06.2020 CN 202010604666
(71) Applicant: Huawei Cloud Computing Technologies Co., Ltd., Guizhou 550025 (CN)
(72) Inventor: LEI, Xingsong, Shenzhen, Guangdong 518129 (CN); XIE, Huaguo, Shenzhen, Guangdong 518129 (CN)
(74) Representative: Thun, Clemens
(86) International application number: PCT/CN2021/092933
(87) International publication number: WO 2022/001376

(57) **Abstract**

This application provides a cloud service resource provisioning method and a related device. The method includes: A scheduling device provides a configuration interface, where the configuration interface is for prompting a tenant to enter a cloud service requirement. The scheduling device obtains the cloud service requirement from the configuration interface, and determines a region selection rule of the tenant based on the cloud service requirement. The scheduling device selects a region according to the region selection rule, and allocates a cloud service in the region to the tenant. The foregoing method can implement global regional resource scheduling, and improve a request success rate of the tenant and resource utilization of a cloud service platform.

## Description

### TECHNICAL FIELD

The present invention relates to the field of cloud computing technologies, and in particular, to a cloud service resource provisioning method and a related device.

### BACKGROUND

As a new industry in recent years, cloud computing has attracted wide attention from the scientific research community and the industry. With emergence of cloud computing around the world, cloud computing becomes an important engine to promote green development of the industry and a new business platform in the 21st century because of a flexible, efficient, low-cost, and energy-saving operation mode.

A region (region) is a data center of a cloud service platform. The region is obtained by a cloud service provider through division based on a geographical location of the data center. The cloud service platform includes a plurality of regions, and each region includes various resources (such as a cloud virtual machine and a cloud hard disk), and is for supporting a tenant business and providing a service for a tenant. Currently, when the tenant requests a resource from the cloud service platform, the tenant needs to specify a region. The cloud service platform provisions a resource of the region to the tenant based on the region specified by the tenant. If the tenant specifies no region, a resource cannot be provisioned. This resource provisioning manner restricts selection performed by the tenant and cannot meet a requirement of the tenant across regions. Consequently, a request success rate of the tenant is reduced, and resource utilization of the cloud service platform is also reduced.

Therefore, how to optimize a manner of provisioning a regional resource of the cloud service platform, so that the tenant can still provision, without specifying a region, a regional resource that meets the requirement of the tenant is an urgent problem to be resolved currently.

### SUMMARY

Embodiments of the present invention provide a cloud service resource provisioning method and a related device, so as to implement global regional resource scheduling, meet a requirement of a tenant across regions, and improve a request success rate of the tenant and resource utilization of a cloud service platform.

According to a first aspect, this application provides a cloud service resource provisioning method. The method includes: A scheduler provides a configuration interface, where the configuration interface is for prompting a tenant to enter a cloud service requirement. The scheduler obtains the cloud service requirement from the configuration interface, and determines a region selection rule of the tenant based on the cloud service requirement. The scheduler selects a region according to the region selection rule, and allocates a cloud service in the region to the tenant.

In the solution provided in this application, the tenant directly enters the cloud service requirement on the configuration interface provided by the scheduler. The tenant does not need to specify a region. Instead, the scheduler automatically determines the region selection rule of the tenant based on the cloud service requirement entered by the tenant, and selects the region according to the rule, so as to allocate the cloud service in the region to the tenant. In this way, the scheduler can implement global regional resource scheduling, improve flexibility of selecting a region by the tenant, and improve a request success rate of the tenant and resource utilization of a cloud service platform.

With reference to the first aspect, in a possible implementation of the first aspect, the cloud service requirement includes the region selection rule and a cloud service specification parameter.

In the solution provided in this application, the tenant may directly enter the region selection rule on the configuration interface provided by the scheduler, and the scheduler selects the region according to the region selection rule entered by the tenant, and allocates the cloud service in the region to the tenant.

With reference to the first aspect, in a possible implementation of the first aspect, the cloud service requirement includes a virtual access point and a cloud service specification parameter, there is a binding relationship between the virtual access point and the region selection rule, and the scheduler determines the region selection rule of the tenant based on the virtual access point.

In the solution provided in this application, the virtual access point and the region selection rule are bound and stored in advance. When entering the cloud service requirement, the tenant may specify the virtual access point. The scheduler searches, based on the virtual access point specified by the tenant, for the region selection rule that matches the specified virtual access point, so as to select the region.

With reference to the first aspect, in a possible implementation of the first aspect, the region selection rule includes a default rule, and the scheduler selects a region according to the default rule.

With reference to the first aspect, in a possible implementation of the first aspect, the region selection rule includes a region range determining rule. The scheduler obtains a geographical location of each region, and selects, based on the geographical location of each region, a region that meets the cloud service requirement.

With reference to the first aspect, in a possible implementation of the first aspect, the region selection rule includes a location awareness rule. The scheduler obtains a geographical location of each region and a geographical location of the tenant, and selects, based on a relationship between the geographical location of the tenant and the geographical location of each region, a region that meets the cloud service requirement.

With reference to the first aspect, in a possible implementation of the first aspect, the region selection rule includes a network awareness rule. The scheduler obtains network quality information of each region, where the network quality information includes a network delay, and selects a region with a minimum network delay based on the network quality information of each region.

With reference to the first aspect, in a possible implementation of the first aspect, the region selection rule includes a tenant awareness rule. The scheduler obtains an associated account of a tenant account, and selects, based on the tenant account and the associated account of the tenant, a region that meets the cloud service requirement.

With reference to the first aspect, in a possible implementation of the first aspect, the region selection rule includes a stock resource awareness rule. The scheduler obtains resource distribution information of a tenant account in different regions, and selects, based on the resource distribution information of the tenant account in the different regions, a region that meets the cloud service requirement.

With reference to the first aspect, in a possible implementation of the first aspect, the region selection rule includes a load awareness rule. The scheduler obtains loads of a tenant account in different regions, and selects a region with a lowest load based on the loads of the tenant account in the different regions.

With reference to the first aspect, in a possible implementation of the first aspect, the region selection rule includes a price awareness rule. The scheduler obtains prices of cloud services in different regions, and selects a region with a lowest price of a cloud service based on the prices of the cloud services in the different regions.

With reference to the first aspect, in a possible implementation of the first aspect, the region selection rule includes a customized rule. The scheduler selects, according to the customized rule, a region that meets the cloud service requirement.

With reference to the first aspect, in a possible implementation of the first aspect, the region selection rule includes any combination of the foregoing rules.

According to a second aspect, this application provides a cloud service resource provisioning method. The method includes: A scheduler provides a service interface, where the service interface is configured to receive a cloud service requirement of a tenant. The scheduler parses the cloud service requirement based on the service interface, to determine a region selection rule of the tenant. The scheduler selects a region according to the region, and allocates a cloud service in the region to the tenant, where the service interface is a service template or an application programming interface API.

With reference to the second aspect, in a possible implementation of the second aspect, the cloud service requirement includes the region selection rule and a cloud service specification parameter.

With reference to the second aspect, in a possible implementation of the second aspect, the cloud service requirement includes a virtual access point and a cloud service specification parameter, there is a binding relationship between the virtual access point and the region selection rule, and the scheduler determines the region selection rule of the tenant based on the virtual access point.

With reference to the second aspect, in a possible implementation of the second aspect, the region selection rule includes a default rule, and the scheduler selects a region according to the default rule.

With reference to the second aspect, in a possible implementation of the second aspect, the region selection rule includes a region range determining rule. The scheduler obtains a geographical location of each region, and selects, based on the geographical location of each region, a region that meets the cloud service requirement.

With reference to the second aspect, in a possible implementation of the second aspect, the region selection rule includes a location awareness rule. The scheduler obtains a geographical location of each region and a geographical location of the tenant, and selects, based on a relationship between the geographical location of the tenant and the geographical location of each region, a region that meets the cloud service requirement.

With reference to the second aspect, in a possible implementation of the second aspect, the region selection rule includes a network awareness rule. The scheduler obtains network quality information of each region, where the network quality information includes a network delay, and selects a region with a minimum network delay based on the network quality information of each region.

With reference to the second aspect, in a possible implementation of the second aspect, the region selection rule includes a tenant awareness rule. The scheduler obtains an associated account of a tenant account, and selects, based on the tenant account and the associated account of the tenant, a region that meets the cloud service requirement.

With reference to the second aspect, in a possible implementation of the second aspect, the region selection rule includes a stock resource awareness rule. The scheduler obtains resource distribution information of a tenant account in different regions, and selects, based on the resource distribution information of the tenant account in the different regions, a region that meets the cloud service requirement.

With reference to the second aspect, in a possible implementation of the second aspect, the region selection rule includes a load awareness rule. The scheduler obtains loads of a tenant account in different regions, and selects a region with a lowest load based on the loads of the tenant account in the different regions.

With reference to the second aspect, in a possible implementation of the second aspect, the region selection rule includes a price awareness rule. The scheduler obtains prices of cloud services in different regions, and selects a region with a lowest price of a cloud service based on the prices of the cloud services in the different regions.

With reference to the second aspect, in a possible implementation of the second aspect, the region selection rule includes a customized rule. The scheduler selects, according to the customized rule, a region that meets the cloud service requirement.

With reference to the second aspect, in a possible implementation of the second aspect, the region selection rule includes any combination of the foregoing rules.

According to a third aspect, this application provides a scheduling device, including: a display module, configured to provide a configuration interface, where the configuration interface is for prompting a tenant to enter a cloud service requirement; a processing module, configured to: obtain the cloud service requirement from the configuration interface, and determine a region selection rule of the tenant based on the cloud service requirement; and a selection and allocation module, configured to: select a region according to the region selection rule, and allocate a cloud service in the region to the tenant.

With reference to the third aspect, in a possible implementation of the third aspect, the cloud service requirement includes the region selection rule and a cloud service specification parameter.

With reference to the third aspect, in a possible implementation of the third aspect, the cloud service requirement includes a virtual access point and a cloud service specification parameter, there is a binding relationship between the virtual access point and the region selection rule, and the processing module is further configured to determine the region selection rule of the tenant based on the virtual access point.

With reference to the third aspect, in a possible implementation of the third aspect, the region selection rule includes a default rule, and the selection and allocation module is specifically configured to select a region according to the default rule.

With reference to the third aspect, in a possible implementation of the third aspect, the region selection rule includes a region range determining rule. The selection and allocation module is specifically configured to: obtain a geographical location of each region; and select, based on the geographical location of each region, a region that meets the cloud service requirement.

With reference to the third aspect, in a possible implementation of the third aspect, the region selection rule includes a location awareness rule. The selection and allocation module is specifically configured to: obtain a geographical location of each region and a geographical location of the tenant; and select, based on a relationship between the geographical location of the tenant and the geographical location of each region, a region that meets the cloud service requirement.

With reference to the third aspect, in a possible implementation of the third aspect, the region selection rule includes a network awareness rule. The selection and allocation module is specifically configured to: obtain network quality information of each region, where the network quality information includes a network delay; and select a region with a minimum network delay based on the network quality information of each region.

With reference to the third aspect, in a possible implementation of the third aspect, the region selection rule includes a tenant awareness rule. The selection and allocation module is specifically configured to: obtain an associated account of a tenant account; and select, based on the tenant account and the associated account of the tenant, a region that meets the cloud service requirement.

With reference to the third aspect, in a possible implementation of the third aspect, the region selection rule includes a stock resource awareness rule. The selection and allocation module is specifically configured to: obtain resource distribution information of a tenant account in different regions; and select, based on the resource distribution information of the tenant account in the different regions, a region that meets the cloud service requirement.

With reference to the third aspect, in a possible implementation of the third aspect, the region selection rule includes a load awareness rule. The selection and allocation module is specifically configured to: obtain loads of a tenant account in different regions; and select a region with a lowest load based on the loads of the tenant account in the different regions.

With reference to the third aspect, in a possible implementation of the third aspect, the region selection rule includes a price awareness rule. The selection and allocation module is specifically configured to: obtain prices of cloud services in different regions, and select a region with a lowest price of a cloud service based on the prices of the cloud services in the different regions.

With reference to the third aspect, in a possible implementation of the third aspect, the region selection rule includes a customized rule, and the selection and allocation module is specifically configured to select a region according to the customized rule.

With reference to the third aspect, in a possible implementation of the third aspect, the region selection rule includes any combination of the foregoing rules.

According to a fourth aspect, this application provides a computing device. The computing device includes a processor and a memory, the memory is configured to store program code, and the processor is configured to invoke the program code in the memory to perform the method according to any one of the first aspect or the implementations of the first aspect.

According to a fifth aspect, this application provides a computer-readable storage medium. The computer-readable storage medium stores a computer program. When the computer program is executed by a processor, a procedure of the cloud service resource provisioning method according to any one of the first aspect and the implementations of the first aspect may be implemented.

According to a sixth aspect, this application provides a computer program product. The computer program product includes instructions. When a computer program product is executed by a computer, the computer is enabled to perform a procedure of the cloud service resource provisioning method according to any one of the first aspect and the implementations of the first aspect.

### BRIEF DESCRIPTION OF DRAWINGS

To describe the technical solutions in embodiments of the present invention more clearly, the following briefly introduces the accompanying drawings used for describing embodiments. It is clear that the accompanying drawings in the following descriptions show some embodiments of the present invention, and a person of ordinary skill in the art may still derive other drawings from these accompanying drawings without creative efforts.
FIG. 1 is a schematic diagram in which a tenant requests to provision a regional resource according to an embodiment of this application;
FIG. 2 is a schematic structural diagram of a regional resource provisioning system according to an embodiment of this application;
FIG. 3 is a schematic diagram of a structure of a region according to an embodiment of this application;
FIG. 4 is a schematic flowchart of a cloud service resource provisioning method according to an embodiment of this application;
FIG. 5 is a schematic diagram of a configuration interface according to an embodiment of this application;
FIG. 6 is a schematic structural diagram of a scheduling device according to an embodiment of this application; and
FIG. 7 is a schematic structural diagram of a computing device according to an embodiment of this application.

### DESCRIPTION OF EMBODIMENTS

The following clearly and completely describes technical solutions in embodiments of this application with reference to accompanying drawings. It is clear that the described embodiments are merely some but not all embodiments of this application. All other embodiments obtained by a person of ordinary skill in the art based on embodiments of this application without creative efforts shall fall within the protection scope of this application.

An "embodiment" mentioned in this specification means that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

Some terms and related technologies in this application are first described with reference to the accompanying drawings, to help a person skilled in the art have a better understanding.

Cloud computing (cloud computing) is a service related to information technologies, software, and the Internet. Cloud computing integrates a plurality of computing resources to form a computing resource sharing pool, and the computing resource sharing pool is also called cloud. Through automatic management of software, a tenant can obtain resources on the cloud at any time based on a requirement. Theoretically, the resources on the cloud can be expanded infinitely.

A region (region) is defined by a cloud service provider based on a geographical location of a data center on a cloud service platform. Each region includes various regional resources (such as a cloud virtual machine, a cloud container, and a cloud hard disk) to support a tenant business and provide a service for a tenant.

A virtual access point is an access point provided for a tenant by combining a plurality of regions in a virtual manner. The tenant invokes an application programming interface (application programming interface, API) via the access point and requests a regional resource.

A virtual machine (virtual machine, VM) is a complete computer system that is simulated by using software, that has a complete hardware system function, and that runs in an entirely isolated environment. All tasks that can be completed in a physical computer can be implemented in the VM. When the VM is created, some hard disks and a memory capacity of the physical computer need to be used as a hard disk and a capacity of the VM. Each VM has an independent hard disk and operating system. Operations can be performed on the virtual machine like a physical machine.

A container (container) is a virtualization technology in a computer operating system. This technology enables processes to run in a relatively independent and isolated environment (including an independent file system, name space, and resource view), thereby simplifying a software deployment process, enhancing software portability and security, and improving system resource utilization. A container technology is widely used in service-oriented scenarios in the cloud computing field.

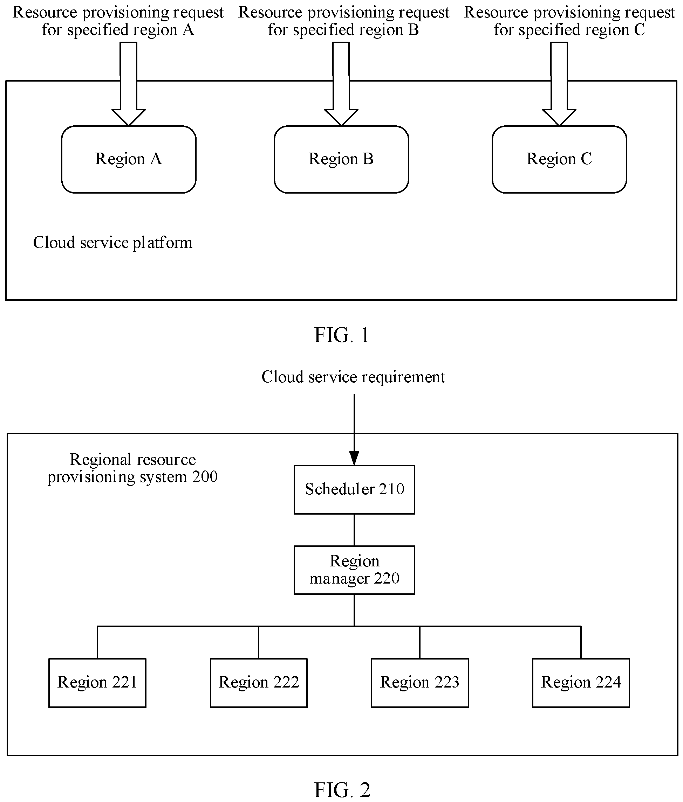

When a tenant requests a cloud service platform to provide a cloud service, the tenant needs to specify a region. To be specific, the tenant can request and use a resource that is only in the specified region. As shown in FIG. 1, the cloud service platform has a plurality of regions, for example, a region A, a region B, and a region C. Each region may include a plurality of clusters, each cluster may include a plurality of hosts, and each host may run a plurality of virtual machines. One region is generally considered as an independent data center. A design architecture feature of the region is used to provide isolation and redundancy. When the tenant requests a resource from the cloud service platform, the tenant needs to specify a region. For example, if the region specified by the tenant is region A, all resources requested by the tenant are provided by region A. That is, the tenant can request a resource that is only in region A. If the tenant needs to use resources that are in a plurality of regions, the tenant needs to send a request for a plurality of times and specify only one region in the request sent each time. For example, if the tenant needs to use resources that are in region A and region B, the tenant needs to send a request for two times. A region specified in the request sent at first time is region A, and a region specified in the request sent at second time is region B.

It can be learned that the foregoing resource provisioning manner restricts tenant selection, and the tenant needs to specify a region to complete resource provisioning. After the tenant specifies the region, resources requested by the tenant cannot be provided across regions. This reduces a request success rate of the tenant and resource utilization of the cloud service platform, and cannot implement cross-region resource pool optimization and management.

This application provides a cloud service resource provisioning method and a related device. The method is performed by a regional resource provisioning system. The regional resource provisioning system may include one or more schedulers. The scheduler provides a configuration interface and receives, through the configuration interface, a cloud service requirement entered by a tenant, determines a region selection rule of the tenant based on the cloud service requirement, obtains, from a region manager, information about each region, to obtain, through screening, a region that meets a tenant requirement, and allocates a cloud service in the region to the tenant. Further, the regional resource provisioning system further includes the region manager, configured to maintain and collect the information about each region. By performing the resource provisioning method of the cloud service, the tenant does not need to specify a region, but only needs to specify a virtual access point or the region selection rule, so that the scheduler can automatically select the region that meets the tenant requirement and allocate the cloud service in the region to the tenant, thereby improving a global resource provisioning capability, and improving a request success rate of the tenant and resource utilization of a cloud service platform.

The technical solutions in embodiments of this application may be further applied to various scenarios in which selection or awareness of a corresponding station needs to be performed in advance, and the scenarios include but are not limited to access of an edge station, traffic distribution, and the like.

The regional resource provisioning system is configured to: determine the region selection rule based on the cloud service requirement entered by the tenant, obtain, through screening according to the region selection rule, the region that meets the tenant requirement, and allocate the cloud service in the region to the tenant. As shown in FIG. 2, a regional resource provisioning system 200 includes a scheduler 210, a region manager 220, a region 221, a region 222, a region 223, and a region 224. The region manager 220 is responsible for maintaining and collecting information about each region, for example, a geographical location, a network delay, an inventory capacity, distribution of a stock resource of a tenant, resource distribution, a load of a stock resource of a tenant, and price information, and storing the collected information about each region for use by the scheduler 210. The scheduler 210 receives a cloud service requirement entered by the tenant and determines a region selection rule, then obtains, through screening based on the information that is about each region and that is stored in the region manager 220, a region that meets a tenant requirement, and then allocates a cloud service in the region to the tenant.

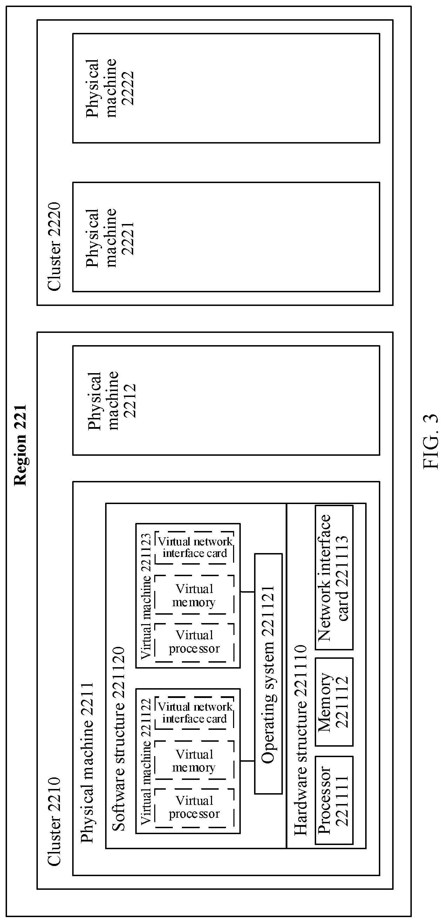

Further, a structure of each region is similar, but a quantity of clusters deployed in each region, a quantity of hosts deployed in each region, and a quota of various resources that can be provided in each region are different. The following uses the region 221 as an example for description, and other regions are similar to the region 221. As shown in FIG. 3, the region 221 includes a cluster 2210 and a cluster 2220. The cluster 2210 includes a physical machine 2211 and a physical machine 2212. The cluster 2220 includes a physical machine 2221 and a physical machine 2222. The physical machine 2211 includes a hardware structure 221110 and a software structure 221120. The hardware structure 221110 includes a processor 221111 (used to provide a processor resource), a memory 221112 (used to provide a memory resource), and a network interface card 221113 (used to provide a network resource). The software structure 221120 includes an operating system 221121 and a virtual machine 221122. The virtual machine 221122 includes a virtual processor, a virtual memory, and a virtual network interface card that are required for virtualization. Structures of the physical machine 2212, the physical machine 2221, and the physical machine 2222 are similar to a structure of the physical machine 2211, and details are not described herein again.

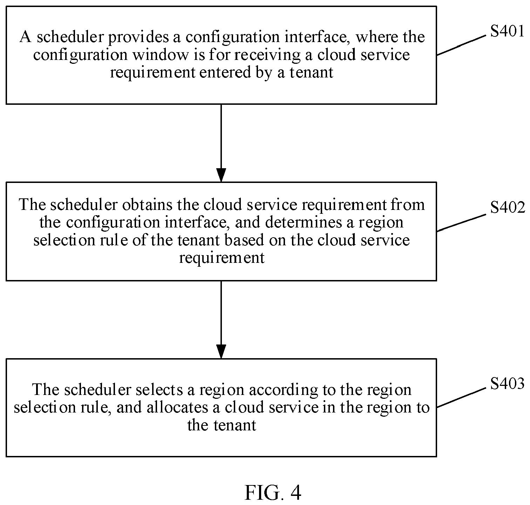

Based on the foregoing descriptions, the following describes a cloud service resource provisioning method and a related device that are provided in embodiments of this application. FIG. 4 is a schematic flowchart of a cloud service resource provisioning method according to an embodiment of this application. As shown in FIG. 4, the method includes but is not limited to the following steps.

S401: A scheduler provides a configuration interface.

Specifically, the scheduler provides the configuration interface to prompt a tenant to enter a cloud service requirement, and the tenant enters the cloud service requirement based on the configuration interface. It should be noted that the configuration interface is different from a configuration interface provided in a conventional technology, the tenant does not need to specify a region or a region identifier (identifier, ID), and the scheduler may automatically select a region based on the cloud service requirement entered by the tenant.

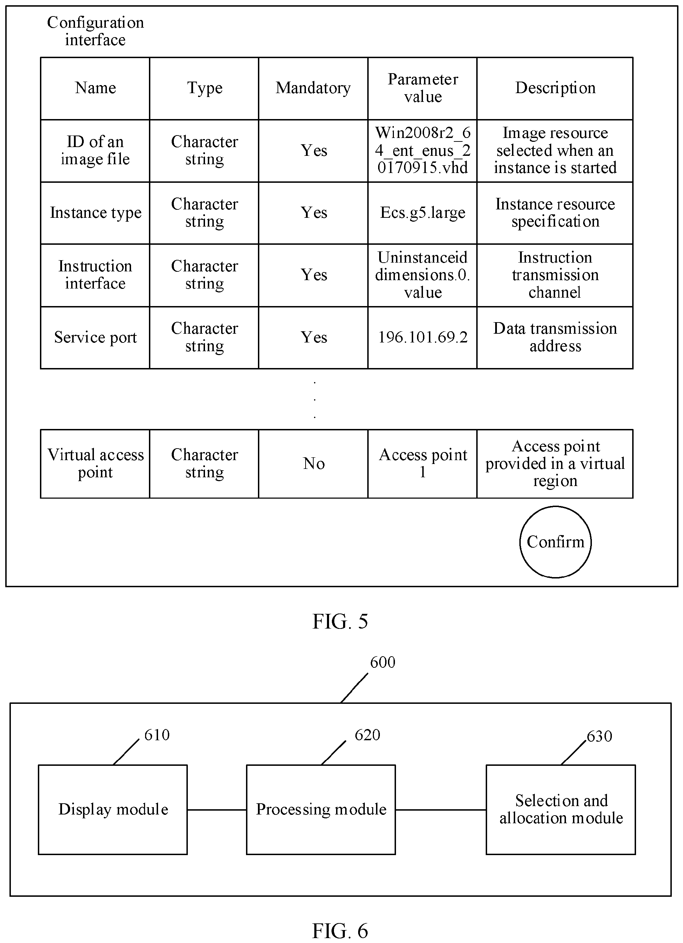

For example, FIG. 5 is a schematic diagram of a configuration interface according to an embodiment of this application. The tenant may select a corresponding parameter such as an ID of an image file, an instance type, a quantity of instances, an instruction interface, or a service port, on the configuration interface based on a requirement to complete configuration. After selecting and completing all parameter configuration, the tenant clicks a confirm button on the interface. The scheduler may complete final configuration based on parameters selected by the tenant, and automatically select a region to allocate a cloud service in the region to the tenant. In this way, the cloud service requirement of the tenant can be met.

Optionally, in addition to a cloud service specification parameter (such as the foregoing ID of the image file or instance type), the cloud service requirement entered by the tenant further includes a region selection rule. The tenant specifies the region selection rule when entering the cloud service requirement, and the scheduler selects, from all regions according to the region selection rule entered by the tenant, a region that meets the rule, and allocates a cloud service in the region to the tenant. For example, on the configuration interface shown in FIG. 5, when performing parameter configuration, the tenant may select a region that provides a cloud service to be a region of the East China. After receiving the cloud service requirement entered by the tenant, the scheduler obtains, from all regions through screening, regions that belong to the East China, and then selects the corresponding region from the regions that belong to the East China to allocate a cloud service in the region to the tenant. The scheduler may randomly select the corresponding region, select the corresponding region based on a region trustlist, or select the corresponding region according to another rule (for example, select a region with a largest quantity of remaining resources). This is not limited in this application.

S402: The scheduler obtains the cloud service requirement from the configuration interface, and determines the region selection rule of the tenant based on the cloud service requirement.

Specifically, after the tenant selects a parameter on the configuration interface, the scheduler obtains the cloud service requirement of the tenant, and further determines the region selection rule of the tenant based on the cloud service requirement.

Optionally, the cloud service requirement includes a virtual access point, where there is a binding relationship between the virtual access point and the region selection rule, and the scheduler determines the region selection rule of the tenant based on the virtual access point. For example, on the configuration interface shown in FIG. 5, when performing parameter configuration, the tenant directly specifies the virtual access point. After receiving the virtual access point specified by the tenant, the scheduler may invoke the region manager 220 shown in FIG. 2. The region manager 220 pre-stores a region selection rule corresponding to each virtual access point, and the scheduler may determine the region selection rule of the tenant by reading a correspondence that is between the virtual access point and the region selection rule and that is stored in the region manager 220. It should be understood that the correspondence between each virtual access point and the region selection rule may be configured based on a requirement in advance. This is not limited in this application.

In a possible implementation, the region selection rule includes a default rule, and the scheduler selects a region according to the default rule.

Specifically, the default rule may be a random selection rule. After the tenant completes entering the cloud service requirement, the scheduler randomly selects a region from all normal regions, and allocates a cloud service in the region to the tenant. In this way, it can be ensured that the cloud service requirement of the tenant can still be met when the tenant does not specify a region.

In another possible implementation, the region selection rule may be a region range determining rule, and the scheduler selects, based on a geographical location of a region, a region that meets the cloud service requirement of the tenant.

Specifically, after determining that the region selection rule of the tenant is the region range determining rule, the scheduler obtains geographical locations of all regions from the region manager, and then selects, based on the obtained geographical location of each region, the region that meets the cloud service requirement of the tenant.

For example, a region selected by the tenant on the configuration interface shown in FIG. 5 to provide a cloud service is a region in the North China. The scheduler obtains, from the region manager based on the cloud service requirement entered by the tenant, geographical locations of all available regions, obtains, through screening, regions belonging to the North China, then randomly selects one or more regions from the regions obtained through screening, and allocates one or more cloud services in the regions to the tenant.

It should be noted that the region manager maintains a communication connection to each region, and the region manager is responsible for collecting and maintaining information about each region, that is, the region manager stores the geographical location of each region. Optionally, the region manager may periodically query the information about each region, and then store the queried information, or each region periodically uploads the information about the region to the region manager. In particular, when information about a region changes, the region may also actively report changed information to the region manager, so that the region manager can update the stored information about the region in a timely manner.

Optionally, in addition to the geographical location of each region, the information that is of each region and that is collected and maintained by the region manager further includes a network delay of each region, a resource inventory capacity of each region, distribution of an existing resource of the tenant in each region, a load of an existing resource of the tenant in each region, a cloud service price of each region, and the like.

In another possible implementation, the region selection rule may be a location awareness rule, and the scheduler selects, based on a relationship between a geographical location of the tenant and a geographical location of a region, a region that meets the cloud service requirement of the tenant.

Specifically, after determining that the region selection rule of the tenant is the location awareness rule, the scheduler obtains geographical locations of all regions from the region manager, and then selects, based on the obtained relationship between the geographical location of each region and the location of the tenant, the region that meets the cloud service requirement of the tenant.

For example, a region selected by the tenant on the configuration interface shown in FIG. 5 to provide a cloud service is a region closest to the tenant. The scheduler determines the geographical location of the tenant based on the cloud service requirement entered by the tenant, obtains the geographical locations of all the available regions from the region manager, calculates a distance between the geographical location of each region and the geographical location of the tenant, selects a region closest to or farthest from the tenant, and allocates a cloud service in the region to the tenant.

In another possible implementation, the region selection rule may be a network awareness rule, and the scheduler selects, based on network quality information of each region, a region that meets the cloud service requirement of the tenant.

Specifically, after determining that the region selection rule of the tenant is the network awareness rule, the scheduler obtains the network quality information of each region from the region manager, where the network quality information includes a network delay. The scheduler selects a region with a minimum or maximum delay based on the obtained network delay of each region.

For example, a region selected by the tenant on the configuration interface shown in FIG. 5 to provide a cloud service is a region with a minimum network delay. The scheduler obtains, from the region manager based on the cloud service requirement entered by the tenant, a network delay of each region, obtains, through screening, the region with the minimum network delay, and allocates a cloud service in the region to the tenant.

In another possible implementation, the region selection rule may be a tenant awareness rule, and the scheduler selects, based on a tenant account and an associated account of the tenant, a region that meets the cloud service requirement of the tenant.

Specifically, after determining that the region selection rule of the tenant is the tenant awareness rule, the scheduler obtains, from the region manager, a region that provides a cloud service for the associated account of the tenant account, and selects, based on affinity between the tenant account and the associated account, the region that provides the cloud service for the associated account as the region that meets the cloud service requirement of the tenant, or selects, based on anti-affinity between the tenant account and the associated account, a region, other than the region that provides the cloud service for the associated account, as the region that meets the cloud service requirement of the tenant.

For example, a region selected by the tenant on the configuration interface shown in FIG. 5 to provide a cloud service for the tenant and the region that provides the cloud service for the associated account of the tenant account are a same region. The scheduler obtains, from the region manager based on the cloud service requirement entered by the tenant, the region that provides the cloud service for the associated account, and allocates the cloud service in the region to the tenant.

In another possible implementation, the region selection rule may be a stock resource awareness rule, and the scheduler selects, based on resource distribution information of a tenant account in different regions, a region that meets the cloud service requirement of the tenant.

Specifically, after determining that the region selection rule of the tenant is the stock resource awareness rule, the scheduler obtains the resource distribution information of the tenant account in the different regions from the region manager, and then selects, based on the obtained resource distribution information of the tenant account in the different regions, a region that has provisioned a resource to the tenant account (in other words, provides a cloud service for the tenant) as the region that meets the cloud service requirement of the tenant, or selects, based on the obtained resource distribution information of the tenant account in the different regions, a region that does not provision a resource to the tenant account as the region that meets the cloud service requirement of the tenant.

For example, a region selected by the tenant on the configuration interface shown in FIG. 5 to provide a cloud service for the tenant and the region that has provisioned the resource to the tenant account are a same region. The scheduler obtains, from the region manager based on the cloud service requirement entered by the tenant, the region that has provisioned the resource to the tenant account, and allocates the cloud service in the region to the tenant.

In another possible implementation, the region selection rule may be a load awareness rule, and the scheduler selects, based on loads of a tenant account in different regions, a region with a lowest load as a region that meets the cloud service requirement of the tenant.

Specifically, after determining that the region selection rule of the tenant is the load awareness rule, the scheduler obtains the loads of the tenant account in the different regions from the region manager, and selects, based on the obtained loads of the tenant account in the different regions, the region with the minimum load as the region that meets the cloud service requirement of the tenant.

For example, a region selected by the tenant on the configuration interface shown in FIG. 5 to provide a cloud service for the tenant is the region with the minimum load of the tenant account. The scheduler obtains, from the region manager based on the cloud service requirement entered by the tenant, the loads of the tenant account in the different regions, selects the region with the minimum load, and allocates a cloud service in the region to the tenant.

In another possible implementation, the region selection rule includes a price awareness rule, and the scheduler selects, based on prices of cloud services in different regions, a region with a lowest price of a cloud service as a region that meets the cloud service requirement of the tenant.

Specifically, after determining that the region selection rule of the tenant is the price awareness rule, the scheduler obtains a price of a cloud service in each region from the region manager, and selects, based on the obtained price of the cloud service in each region, the region with the lowest price of the cloud service as the region that meets the cloud service requirement of the tenant.

For example, a region selected by the tenant on the configuration interface in FIG. 5 to provide a cloud service for the tenant is the region with the lowest price of the cloud service. The scheduler obtains the price of the cloud service in each region from the region manager based on the cloud service requirement entered by the tenant, selects the region with the lowest price, and allocates a cloud service in the region to the tenant.

In another possible implementation, the region selection rule may be a customized rule, and the scheduler selects a region according to the customized rule.

Specifically, the customized rule may be a rule pre-defined by the tenant based on a preference of the tenant. For example, the rule pre-defined by the tenant is allocating a cloud service to the tenant in a priority sequence of region A, region B, and region C. After the tenant enters the cloud service requirement, the scheduler first selects region A to allocate a cloud service to the tenant. If there is no redundant resource and a cloud service cannot be allocated to the tenant in region A, the scheduler selects region B to allocate a cloud service to the tenant. If there still is no redundant resource in region B, the scheduler selects region C to allocate a cloud service to the tenant.

In another possible implementation, the region selection rule includes any combination of the foregoing rules, and the scheduler selects, based on the cloud service requirement entered by the tenant, a region that meets a plurality of rules.

For example, it is assumed that there are region A, region B, region C, and region D. A region selected by the tenant on the configuration interface shown in FIG. 5 to provide a cloud service is a region closest to the tenant and with a lowest price of a cloud service. The scheduler first determines the geographical location of the tenant based on the cloud service requirement entered by the tenant, then obtains the geographical location of each region from the region manager, calculates the distance between the geographical location of each region and the geographical location of the tenant, and sorts the regions in ascending order of distances. A finally obtained sequence is region A-region D-region B-region C. A higher rank indicates a closer distance to the tenant, and region A has a highest rank. This indicates that region A is the closest to the tenant, and region C is the farthest from the tenant. Then, the scheduler obtains the price of the cloud service of each region from the region manager, and sorts the regions in ascending order of prices. A finally obtained sequence is region B-region D-region C-region A. The scheduler performs screening on the obtained two sequences, to finally determine region D as the region that meets the cloud service requirement of the tenant, that is, the region D is the closest to the tenant and has a lowest price of a cloud service, and allocates the cloud service in the region D to the tenant.

It is easy to understand that the region selection rule may be any combination of other rules. For example, a region with a lowest price of a cloud service and a lowest load, a region that has a minimum network delay and that provides a cloud service for the tenant, and a region that provides a cloud service for the associated account of the tenant account are a same region, or a region that provides a cloud service for the tenant and a region that has provisioned a resource for the tenant account are a same region and have a minimum network delay and a lowest price of a cloud service. For brevity, details are not described herein again.

S403: The scheduler selects the region according to the region selection rule, and allocates the cloud service in the region to the tenant.

Specifically, after selecting the region that meets the cloud service requirement of the tenant, the scheduler forwards a resource provisioning request to the corresponding physical region. After receiving the request sent by the scheduler, the physical region provides an API interface for the tenant based on a display interface, and the tenant completes regional resource provisioning by invoking the API interface.

It can be learned that, by executing the method shown in FIG. 4, the scheduler may obtain, in real time by communicating with the region manager, the information of each region and the region selection rule corresponding to the virtual access point. Therefore, in a process of requesting a cloud service, the tenant does not need to specify a region, but only needs to specify the region selection rule or the virtual access point. The scheduler may obtain, through screening and based on the region selection rule or the virtual access point specified by the tenant and the information that is of each region and that is stored in the region manager, one or more regions that meet the cloud service requirement of the tenant, and allocate a cloud service in the one or more regions to the tenant. In this way, the scheduler can implement global resource scheduling, and a user can use resources of a plurality of regions at the same time. A request of the user can be met across regions, thereby improving a request success rate of the user and resource utilization of a cloud service platform.

The method in embodiments of this application is described in detail above. For ease of better implementing the solutions in embodiments of this application, correspondingly related devices used to cooperate in implementing the solutions are further provided below.

FIG. 6 is a schematic structural diagram of a scheduling device according to an embodiment of this application. The scheduling device may be the scheduler in the method embodiment in FIG. 4, and may perform the method and the steps performed by the scheduler in the embodiment of the cloud service resource provisioning method in FIG. 4. As shown in FIG. 6, a scheduling device 600 includes a display module 610, a processing module 620, and a selection and allocation module 630.

The display module 610 is configured to provide a configuration interface, where the configuration interface is for prompting a tenant to enter a cloud service requirement.

The processing module 620 is configured to: obtain the cloud service requirement from the configuration interface, and determine a region selection rule of the tenant based on the cloud service requirement.

The selection and allocationmodule 630 is configured to: select a region according to the region selection rule, and allocate a cloud service in the region to the tenant.

Specifically, the display module 610 is configured to: perform the foregoing step S401, and optionally perform the optional method in the foregoing steps. The processing module 620 is configured to: perform the foregoing step S402, and optionally perform the optional method in the foregoing steps. The selection and allocation module 630 is configured to: perform the foregoing step S403, and optionally perform the optional method in the foregoing steps. The three modules may communicate data to each other through a communication channel. It should be understood that the units included in the scheduling device 600 may be software units, or may be hardware units, or some of the units are software units and some of the units are hardware units.

In an embodiment, the cloud service requirement includes the region selection rule and a cloud service specification parameter.

In an embodiment, the cloud service requirement includes a virtual access point and a cloud service specification parameter, there is a binding relationship between the virtual access point and the region selection rule, and the processing module 620 is further configured to determine the region selection rule of the tenant based on the virtual access point.

In an embodiment, the region selection rule includes a default rule, and the selection and allocation module 630 is specifically configured to select a region according to the default rule.

In an embodiment, the region selection rule includes a region range determining rule. The selection and allocation module 630 is specifically configured to: obtain a geographical location of each region; and select, based on the geographical location of each region, a region that meets the cloud service requirement.

In an embodiment, the region selection rule includes a location awareness rule. The selection and allocation module 630 is specifically configured to: obtain a geographical location of each region and a geographical location of the tenant; and select, based on a relationship between the geographical location of the tenant and the geographical location of each region, a region that meets the cloud service requirement.

In an embodiment, the region selection rule includes a network awareness rule. The selection and allocation module 630 is specifically configured to: obtain network quality information of each region, where the network quality information includes a network delay; and select a region with a minimum network delay based on the network quality information of each region.

In an embodiment, the region selection rule includes a tenant awareness rule. The selection and allocation module 630 is specifically configured to: obtain an associated account of a tenant account; and select, based on the tenant account and the associated account of the tenant, a region that meets the cloud service requirement.

In an embodiment, the region selection rule includes a stock resource awareness rule. The selection and allocation module 630 is specifically configured to: obtain resource distribution information of a tenant account in different regions; and select, based on the resource distribution information of the tenant account in the different regions, a region that meets the cloud service requirement.

In an embodiment, the region selection rule includes a load awareness rule. The selection and allocation module 630 is specifically configured to: obtain loads of a tenant account in different regions; and select a region with a lowest load based on the loads of the tenant account in the different regions.

In an embodiment, the region selection rule includes a price awareness rule. The selection and allocation module 630 is specifically configured to: obtain prices of cloud services in different regions, and select a region with a lowest price of a cloud service based on the prices of the cloud services in the different regions.

In an embodiment, the region selection rule includes a customized rule, and the selection and allocation module 630 is specifically configured to select a region according to the customized rule.

In an embodiment, the region selection rule includes any combination of the foregoing rules.

It may be understood that the display module 610 in this embodiment of this application may be implemented by a display or a display-related circuit component, and the processing module 620 and the selection and allocation module 630 may be implemented by a processor or a processor-related circuit component.

It should be noted that, a structure of the scheduling device is merely an example, and should not constitute a specific limitation. Modules in the scheduling device may be added, reduced, or combined based on a requirement. In addition, operations and/or functions of the modules in the scheduling device are intended to implement corresponding procedures of the method described in FIG. 4. For brevity, details are not described herein again.

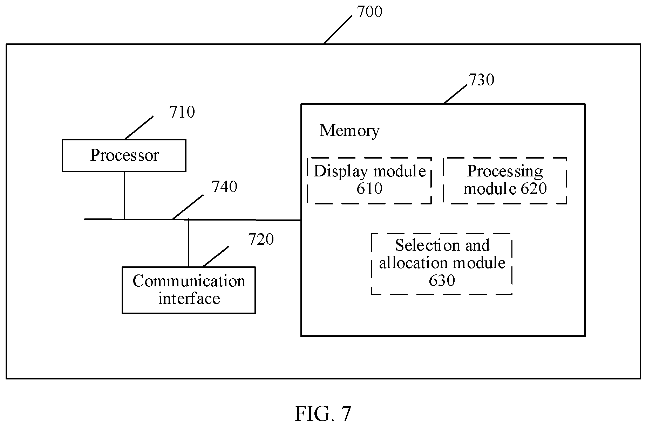

FIG. 7 is a schematic structural diagram of a computing device according to an embodiment of this application. As shown in FIG. 7, a computing device 700 includes a processor 710, a communication interface 720, and a memory 730. The processor 710, the communication interface 720, and the memory 730 are connected to each other through an internal bus 740. It should be understood that the computing device 700 may be a computing device in cloud computing or a computing device in an edge environment.

The processor 710 may include one or more general-purpose processors, for example, a central processing unit (central processing unit, CPU), or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The bus 740 may be a peripheral component interconnect (peripheral component interconnect, PCI) bus, an extended industry standard architecture (extended industry standard architecture, EISA) bus, or the like. The bus 740 may be classified into an address bus, a data bus, a control bus, and the like. For ease of representation, only one thick line is used to represent the bus in FIG. 7, but this does not mean that there is only one bus or only one type of bus.

The memory 730 may include a volatile memory (volatile memory) such as a random access memory (random access memory, RAM), or the memory 730 may include a non-volatile memory (non-volatile memory) such as a read-only memory (read-only memory, ROM), a flash memory (flash memory), a hard disk drive (hard disk drive, HDD), or a solid-state drive (solid-state drive, SSD), or the memory 730 may include a combination of the foregoing types.

It should be noted that, the memory 730 of the computing device 700 stores code corresponding to each module of the scheduling device 600, and the processor 710 executes the code to implement a function of each unit of the scheduling device 600, that is, performs the method in S401 to S403.

This application further provides a computer-readable storage medium. The computer-readable storage medium stores a computer program. When the computer program is executed by a processor, some or all of the steps recorded in any one of the foregoing method embodiments may be implemented.

An embodiment of the present invention further provides a computer program, and the computer program includes instructions. When the computer program is executed by a computer, the computer is enabled to perform some or all steps of any method for provisioning a regional resource.

In the foregoing embodiments, the descriptions of each embodiment have respective focuses. For a part that is not described in detail in an embodiment, refer to related descriptions in other embodiments.

It should be noted that, for brief description, the foregoing method embodiment is represented as a series of actions. However, a person skilled in the art should appreciate that this application is not limited to the described order of the actions, because according to this application, some steps may be performed in another order or simultaneously. In addition, a person skilled in the art should also appreciate that all embodiments described in this specification are embodiments, and the related actions and modules are not necessarily mandatory to this application.

In the several embodiments provided in this application, it should be understood that the disclosed apparatuses may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

## Claims

1. A cloud service resource provisioning method, comprising:
providing a configuration interface, wherein the configuration interface is for prompting a tenant to enter a cloud service requirement;
obtaining the cloud service requirement from the configuration interface, and determining a region selection rule of the tenant based on the cloud service requirement; and
selecting a region according to the region selection rule, and allocating a cloud service in the region to the tenant.

2. The method according to claim 1, wherein the cloud service requirement comprises the region selection rule and a cloud service specification parameter.

3. The method according to claim 1, wherein the cloud service requirement comprises a virtual access point and a cloud service specification parameter, there is a binding relationship between the virtual access point and the region selection rule, and the determining a region selection rule of the tenant based on the cloud service requirement comprises:
determining the region selection rule of the tenant based on the virtual access point.

4. The method according to any one of claims 1 to 3, wherein the region selection rule comprises a default rule, and the selecting a region according to the region selection rule comprises: selecting a region according to the default rule.

5. The method according to any one of claims 1 to 3, wherein the region selection rule comprises a region range determining rule, and the selecting a region according to the region selection rule comprises:
obtaining a geographical location of each region; and
selecting, based on the geographical location of each region, a region that meets the cloud service requirement.

6. The method according to any one of claims 1 to 3, wherein the region selection rule comprises a location awareness rule, and the selecting a region according to the region selection rule comprises:
obtaining a geographical location of each region and a geographical location of the tenant; and
selecting, based on a relationship between the geographical location of the tenant and the geographical location of each region, a region that meets the cloud service requirement.

7. The method according to any one of claims 1 to 3, wherein the region selection rule comprises a network awareness rule, and the selecting a region according to the region selection rule comprises:
obtaining network quality information of each region, wherein the network quality information comprises a network delay; and
selecting a region with a minimum network delay based on the network quality information of each region.

8. The method according to any one of claims 1 to 3, wherein the region selection rule comprises a tenant awareness rule, and the selecting a region according to the region selection rule comprises:
obtaining an associated account of a tenant account; and
selecting, based on the tenant account and the associated account, a region that meets the cloud service requirement.

9. The method according to any one of claims 1 to 3, wherein the region selection rule comprises a stock resource awareness rule, and the selecting a region according to the region selection rule comprises:
obtaining resource distribution information of a tenant account in different regions; and
selecting, based on the resource distribution information of the tenant account in the different regions, a region that meets the cloud service requirement.

10. The method according to any one of claims 1 to 3, wherein the region selection rule comprises a load awareness rule, and the selecting a region according to the region selection rule comprises:
obtaining loads of a tenant account in different regions; and
selecting a region with a lowest load based on the loads of the tenant account in the different regions.

11. The method according to any one of claims 1 to 3, wherein the region selection rule comprises a price awareness rule, and the selecting a region according to the region selection rule comprises:
obtaining prices of cloud services in different regions; and
selecting a region with a lowest price of a cloud service based on the prices of the cloud services in the different regions.

12. The method according to any one of claims 1 to 3, wherein the region selection rule comprises a customized rule, and the selecting a region according to the region selection rule comprises: selecting, according to the customized rule, a region that meets the cloud service requirement.

13. The method according to any one of claims 4 to 12, wherein the region selection rule comprises any combination of the foregoing rules.

14. A scheduling device, comprising:
a display module, configured to provide a configuration interface, wherein the configuration interface is for prompting a tenant to enter a cloud service requirement;
a processing module, configured to: obtain the cloud service requirement from the configuration interface, and determine a region selection rule of the tenant based on the cloud service requirement; and
a selection and allocation module, configured to: select a region according to the region selection rule, and allocate a cloud service in the region to the tenant.

15. The scheduling device according to claim 14, wherein the cloud service requirement comprises the region selection rule and a cloud service specification parameter.

16. The scheduling device according to claim 14, wherein the cloud service requirement comprises a virtual access point and a cloud service specification parameter, and there is a binding relationship between the virtual access point and the region selection rule; and
the processing module is further configured to determine the region selection rule of the tenant based on the virtual access point.

17. The scheduling device according to any one of claims 14 to 16, wherein the region selection rule comprises a default rule, and
the selection and allocation module is specifically configured to select a region according to the default rule.

18. The scheduling device according to any one of claims 14 to 16, wherein the region selection rule comprises a region range determining rule, and
the selection and allocation module is specifically configured to:
obtain a geographical location of each region; and
select, based on the geographical location of each region, a region that meets the cloud service requirement.

19. The scheduling device according to any one of claims 14 to 16, wherein the region selection rule comprises a location awareness rule, and
the selection and allocation module is specifically configured to:
obtain a geographical location of each region and a geographical location of the tenant; and
select, based on a relationship between the geographical location of the tenant and the geographical location of each region, a region that meets the cloud service requirement.

20. The scheduling device according to any one of claims 14 to 16, wherein the region selection rule comprises a network awareness rule, and
the selection and allocation module is specifically configured to:
obtain network quality information of each region, wherein the network quality information comprises a network delay; and
select a region with a minimum network delay based on the network quality information of each region.

21. The scheduling device according to any one of claims 14 to 16, wherein the region selection rule comprises a tenant awareness rule, and
the selection and allocation module is specifically configured to:
obtain an associated account of a tenant account; and
select, based on the tenant account and the associated account of the tenant, a region that meets the cloud service requirement.

22. The scheduling device according to any one of claims 14 to 16, wherein the region selection rule comprises a stock resource awareness rule, and
the selection and allocation module is specifically configured to:
obtain resource distribution information of a tenant account in different regions; and
select, based on the resource distribution information of the tenant account in the different regions, a region that meets the cloud service requirement.

23. The scheduling device according to any one of claims 14 to 16, wherein the region selection rule comprises a load awareness rule, and
the selection and allocation module is specifically configured to:
obtain loads of a tenant account in different regions; and
select a region with a lowest load based on the loads of the tenant account in the different regions.

24. The scheduling device according to any one of claims 14 to 16, wherein the region selection rule comprises a price awareness rule, and
the selection and allocation module is specifically configured to:
obtain prices of cloud services in different regions; and
select a region with a lowest price of a cloud service based on the prices of the cloud services in the different regions.

25. The scheduling device according to any one of claims 14 to 16, wherein the region selection rule comprises a customized rule, and
the selection and allocation module is specifically configured to select a region according to the customized rule.

26. The scheduling device according to any one of claims 17 to 25, wherein the region selection rule comprises any combination of the foregoing rules.

27. A computing device, wherein the computing device comprises a memory and a processor, and the processor executes computer instructions stored in the memory, to enable the computing device to perform the method according to any one of claims 1 to 13.

28. A computer-readable storage medium, wherein the computer-readable storage medium stores a computer program, and when the computer program is executed by a processor, the processor performs the method according to any one of claims 1 to 13.
